(19) Europäisches Patentamt
European Patent Office
Office européen des brevets

(11) EP 3 514 200 B1

(12) EUROPEAN PATENT SPECIFICATION

(45) Date of publication and mention of the grant of the patent:
**26.08.2020 Bulletin 2020/35**

(51) Int Cl.:
***C08J 11/28*** *(2006.01)* ***C08C 19/08*** *(2006.01)*

(21) Application number: **19153050.0**

(22) Date of filing: **22.01.2019**

(54) **A METHOD OF DEVULCANIZING A RUBBER VULCANIZATE**

VERFAHREN ZUR DEVULKANISIERUNG VON VULKANISIERTEM KAUTSCHUK

PROCÉDÉ DE DÉVULCANISATION D'UN CAOUTCHOUC VULCANISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2018 NL 2020302**

(43) Date of publication of application:
**24.07.2019 Bulletin 2019/30**

(73) Proprietor: **Kargro Recycling B.V.**
**6031 MZ Nederweert (NL)**

(72) Inventors:
- **Van den Brand, Johannes Hendrikus**
**6451 AT Schinveld (NL)**
- **Dierkes, Wilma Karola**
**7522 KR Enschede (NL)**
- **Noordermeer, Jacobus Wilhelmus Maria**
**6118 DV Nieuwstadt (NL)**

(74) Representative: **Brouwer, Hendrik Rogier et al**
**Arnold & Siedsma**
**Bezuidenhoutseweg 57**
**2594 AC Den Haag (NL)**

(56) References cited:
**WO-A1-01/23465** **WO-A1-2014/084727**
**WO-A2-2012/134266**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 514 200 B1

## Description

BACKGROUND OF THE INVENTION

### Field of the Invention

The present invention relates to the field of rubber polymers, and particularly to a method of devulcanizing a rubber vulcanizate, such as obtained from waste tire rubber. The method in particular relates to a method of devulcanizing a vulcanizate mainly from natural rubber, such as obtained from waste truck tire rubber.

### Description of the Related Art

The recycling of vulcanized rubber products presents a challenging problem because rubber vulcanizate is typically cross-linked with sulfur or peroxides and therefore forms a thermosetting network that cannot be reformed into other products without degrading the network.

Tires, hoses, belts and other rubber products are therefore conveniently discarded after they have been worn out during their service lifetime. There has however been a continuous interest in recycling vulcanized rubber products since dumping rubber products is undesirable from an environmental point of view. A major amount of rubber vulcanizate from tires and other rubber products is shredded or ground to obtain rubber crumb with relatively small particle size. This crumb is incorporated into various products as filler, and can for instance be used in rubber formulations for new tires, or in other rubber products. Since the thermosetting network in the filler is substantially unaffected by shredding or grinding, the filler does not co-cure to an appreciable extent with the surrounding material.

Although shredding or grinding rubber vulcanizate to obtain filler is certainly valuable, some value of the rubber is lost in the process. Indeed, the properties of the filled product may not be optimal.

Various techniques for devulcanizing rubber vulcanizate have been proposed in the hope of rendering the rubber suitable for reformulation and recurrence into new rubber articles without degradation of the rubber. In other words, the rubber vulcanizate is 'broken down' to its constituents and used again for its original intended purpose.

WO 2012/134266 A2 discloses a devulcanizing agent and a corresponding method for devulcanizing rubber. The process described comprises mixing natural rubber with the devulcanizing agent at about 90° C. A devulcanizing agent that contains an organic sulfur compound is preferred.

WO 01/23465 A1 also discloses a method for devulcanizing rubber, in which an amine is used as a devulcanizing agent.

In the process disclosed in WO 2014/084727 A1, organic sulfur compounds are used as a devulcanizing agent.

None of the devulcanization techniques previously developed has proven to be commercially viable, one of the main problems being the inability to obtain good properties. The poor properties of de-vulcanized rubber, caused by the structural changes of the polymer molecules is mainly due to the intensive physical forces, i.e., shearing and high temperature, applied in known devulcanization methods. Under severe shear and high temperature, various reactions occur during the devulcanization process causing polymer chain breakage next to the desired crosslink scission.

Another problem is that the known devulcanization methods are generally less controllable. In particular, it has been observed that the ratio of main-chain scission to crosslink scission, which should be as low as possible, is not easily controlled. Recombination of radical moieties of broken rubber chains for instance may occur, leading to de-vulcanized rubber products with poor properties.

Devulcanizing agents have been proposed in the art. An effective class of devulcanizing agents comprises sulfur containing compounds such as disulfides and thiols. Organosulfur compounds such a polysulfides have proven to be effective in cleaving polymer chains in the rubber vulcanizate and yet preventing too much depolymerization, by which is meant cleavage of the polymer chains of the rubber vulcanizate.

However, a reason why these sulfur containing compounds have not been commercially successful throughout is their rather bad smell. The odor problem occurs during devulcanization in the plant but may also persist during use of revulcanized rubber vulcanizates based on the devulcanized rubber.

One aim of the present invention therefore is to provide a method of devulcanizing a rubber vulcanizate that yields re-vulcanized rubber products with satisfactory properties compared to those obtained from known methods, but poses less of an odor problem.

SUMMARY OF THE INVENTION

The invention thereto provides a method in accordance with claim 1. A method of devulcanizing a rubber vulcanizate of polymer chains and sulfur-containing cross-links between the polymer chains is provided, wherein the rubber vulcanizate is mixed with a devulcanizing agent and the mixture is brought to a temperature sufficient to cause

cleavage of the sulfur-containing cross-links, wherein the devulcanizing agent comprises a p-phenylene diamine compound having the following formula:

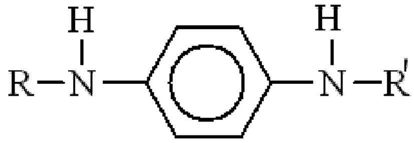

wherein R and R' can be the same or different groups, and may be hydrogen, alkyl or aryl, and the devulcanizing agent is substantially free of an organosulfur compound by comprising at most 1 wt.% of the organosulfur compound, and wherein further the temperature during devulcanization is between 170°C and 280°C.

By utilizing the method of this invention, cured rubber is effectively de-vulcanized without producing an undesired odor. The p-phenylene diamine compounds used in the claimed method are known per se as anti-ozonants in rubber products. It was not known hitherto that these compounds could also be used as effective devulcanizing agents, albeit in larger relative amounts than when used as anti-ozonant, at least preferably.

Therefore, according to the invention, a p-phenylene diamine compound having the following formula:

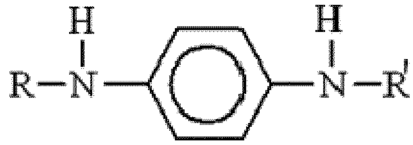

wherein R and R' can be the same or different groups, and may be hydrogen, alkyl or aryl is claimed for use in devulcanizing rubber vulcanizates.

The invention requires that the devulcanizing agent is substantially free of an organosulfur compound. By this is meant in the context of the present invention that the devulcanizing agent comprises at most 1 wt.% of an organosulfur compound, more preferably at most 0,5 wt.% of an organosulfur compound, even more preferably at most 0,1 wt.% of an organosulfur compound, and most preferably 0 wt.% of an organosulfur compound.

The p-phenylene diamine devulcanizing agent used in the method according to the invention may be chosen from a range of such amine compounds, and the choice may for instance depend on the type of rubber vulcanizate to be de-vulcanized.

An embodiment of the method uses a p-phenylene diamine compound comprising a N, N'-dialkyl-p-phenylenediamine (R and R' are alkyl).

In another embodiment of the invented method, the p-phenylene diamine compound comprises a N, N'-diaryl-p-phenylenediamine (R and R' are aryl).

According to yet another embodiment of the method, the p-phenylene diamine compound comprises a N-alkyl-N'-aryl-p-phenylenediamine (R is alkyl and R' is aryl).

A particularly preferred method according to an embodiment of the invention uses a p-phenylene diamine compound comprising a N-alkyl-N'-aryl-p-phenylenediamine wherein R is alkyl and contains from 3 to 11 carbon atoms.

Even more preferred, the aryl group is a phenyl group. Among these compounds, a p-phenylenediamine compound comprising a N-(1,3-dimethylbutyl)-N'-phenyl-p-phenylenediamine has proven to be particularly effective as devulcanizing agent in a method according to some embodiments of the invention.

Another aspect of the invention is directed to a method, further comprising mixing the rubber vulcanizate with a swelling agent and/or solvent. It is known that energies of carbon-sulfur and sulfur-sulfur bonds in a rubber vulcanizate network are lower than that of the carbon-carbon bonds in the polymer chains, and that carbon-sulfur and sulfur-sulfur bonds are more easily broken up by shear stress during mixing in for instance an extruder. Adding a swelling agent increases mobility of the devulcanizing agent and other aids and allows higher shear stresses, leading to an increased efficiency of devulcanization of the rubber.

In an embodiment of the method according to the invention, the solvent or swelling agent is selected from the group consisting of one or more of toluene, naphtha, terpenes, benzene, cyclohexane, diethyl carbonate, ethyl acetate, ethyl benzene, isophorone, isopropyl acetate, methyl ethyl ketone and derivatives thereof.

Still another aspect of the invention relates to a method, wherein the amount of devulcanizing agent ranges from 1 to 10 wt%, relative to the total weight of the rubber vulcanizate, more preferred from 2 to 8 wt%, and even more preferred from 4 to 6 wt%, relative to the total weight of the rubber vulcanizate. Since the claimed p-phenylene diamine compound is preferably used as sole devulcanizing agent in the method, the amount of p-phenylene diamine compound in the method preferably ranges from 1 to 10 wt%, relative to the total weight of the rubber vulcanizate, more preferably

from 2 to 8 wt%, and even more preferably from 4 to 6 wt%, relative to the total weight of the rubber vulcanizate.

The amount of the swelling agent may be varied within a wide range but in an embodiment of the method ranges from 1 to 10 wt%, relative to the total weight of the rubber vulcanizate, more preferred from 2 to 8 wt%, and even more preferred from 4 to 6 wt%, relative to the total weight of the rubber vulcanizate.

Although the use of an oxidation stabilizer in the method is not necessary for obtaining good results, such an oxidation stabilizer may be used besides the p-phenylene diamine compound. Suitable oxidation stabilizers for instance comprise a phenolic compound, a phosphorous compound, amine compounds that contain a basic nitrogen atom with a lone electron pair, such as hindered amine light stabilizers, or a combination of both.

An optional oxidation stabilizer may be used in relatively small amounts. In an embodiment of the invented method, the amount of oxidation stabilizer ranges from 0.1 to 5 wt%, relative to the total weight of the rubber vulcanizate, and more preferred from 0.5 to 2 wt%, relative to the total weight of the rubber vulcanizate.

In another embodiment of the method according to the invention, oxygen is substantially eliminated during the devulcanization step. This helps in preventing abstraction of hydrogen atoms from the rubber vulcanizate polymer chains. An embodiment of the method according to the invention thereto performs the devulcanization in a nitrogen-atmosphere.

In an embodiment of the method according to the invention, mixing the rubber vulcanizate and the devulcanization agent and other optional ingredients, as well as performing the actual devulcanization may be carried out in an internal mixer or an extruder. Suitable extruders include but are not limited to single screw extruders, corotating twin or multiple screw extruders and ram extruders. The screw configuration of the extruder may among others comprise transporting elements, kneading elements and pressurizing elements.

A particularly preferred extruder comprises a planetary extruder. Such an extruder comprises a single central screw, but is also equipped with multiple planetary screws, comprising a plurality of relatively small extruder screws, provided in parallel to the main screw. The extruder contains for instance 8 satellite screws. The satellite screws are arranged around the main screw, and rotate in a direction opposite to the rotating direction of the main screw around the screw axis. This arrangement increases the surface exchange of the rubber vulcanizate melt and this surface is constantly replaced at a relatively high rate by the action of the satellite screws in the multiple screw section. This also allows a more accurate control of the melt temperature.

Another aspect of the invention relates to a method, wherein the temperature during devulcanization is between 170°C and 320°C, more preferably between 170°C and 280°C, even more preferably between 170°C and 240°C, more preferably between 190°C and 280°C, and even more preferably between 190°C and 240°C. Raising the temperature may increase the speed of devulcanization but preferably measures have to be taken to substantially prevent abstraction of hydrogen atoms from the rubber vulcanizate polymer chains. The temperatures of the indicated range help in decreasing shear stresses acting on the rubber vulcanizate during devulcanization, which lowers the risk for polymer chain scission. The desired temperature during devulcanization may be reached by appropriate setting of the temperature of (different parts of) the apparatus, for instance an extruder, and/or by appropriate cooling of (different parts of) the apparatus, for instance an extruder.

The temperature at which abstraction of hydrogen atoms from the rubber vulcanizate polymer chains is substantially prevented is defined as the threshold temperature above which an increase in cross-link density is observed in the (partly) de-vulcanized rubber, compared to the cross-link density obtained at a lower devulcanization temperature, as will be explained in more detail below.

The method of the invention may be used for devulcanizing any known rubber vulcanizate. In suitable embodiments of the method according to the invention, the rubber vulcanizate comprises natural rubber (NR), butadiene rubber (BR), isoprene rubber (IR), butyl rubber (IIR, CIIR or BIIR), ethylene-propylene rubber (EPM), styrene-butadiene rubber (SBR), chloroprene rubber (CR), nitrile rubber (NBR), acrylic rubber (ACM), ethylene-propylene-diene rubber (EPDM), or mixtures thereof. This list is not limitative and other rubber vulcanizates may be used. The method has been found to be particularly effective for devulcanizing natural rubber (NR) vulcanizate obtained from truck tire scrap.

The rubber vulcanizate may be provided to the equipment for mixing and devulcanization in any suitable form. The rubber vulcanizate for instance may be provided in scrapped form, optionally in a finely divided form, such as obtained by grinding and filtering methods, known per se.

The method of the invention has the additional advantage that the rubber vulcanizate may be provided in a particular form with relatively large particle size. This obviates the use of additional process steps to obtain a finely divided feed to the equipment. An embodiment of the method is thereto provided in which the rubber vulcanizate is provided in a particular form with a particle size ranging from 0,8 to 2 mm.

The method of the invention can be applied to unfilled as well as to filled rubbers. Filled rubbers may comprise fillers such as carbon black, silica, organic and inorganic fibers, and others.

## BRIEF DESCRIPTION OF THE FIGURES AND TABLES

The invention will now be described in more detail with reference to the accompanying figures and tables,

without however being limited thereto. In the figures:

Figure 1 shows a number of rheological curves indicative of the curing behavior of devulcanized rubber compound when re-vulcanized; and
Figure 2 shows a schematic diagram of the sol fraction generated during devulcanization in function of the relative decrease in crosslink density of de-vulcanized rubber compound.

DETAILED DESCRIPTION OF THE INVENTION

While the above description provides ample information to enable one skilled in the art to carry out the invention, examples of preferred methods will be described in detail without limitation of the scope of the invention.

EXAMPLES ACCORDING TO THE INVENTION AND COMPARATIVE EXPERIMENTS

MATERIALS

In the Examples and Comparative Experiments, rubber obtained from truck tires was used. The truck tires on average comprised about 27wt.% of natural rubber, 14wt.% of synthetic rubber, 28wt.% of carbon black, 14-15wt.% of steel, and about 16-17wt.% of textile fabric made of polyester and nylon fibers. Rubber crumb was obtained by shredding the truck tires, producing shredded particles or ships of about 1 to 2 cm. These tire chips then underwent a series of granulations at room temperature (ambient grinding) to produce crumb rubber particles of a size 2.5-8 mm. The temperature during this ambient grinding may increase above ambient temperature, for instance due to friction, even up to 80°C. The size reduction allowed steel removal by magnetic separation, as well as fiber removal by gravity separation. The rubber crumb particle bulk density was about 1.4 g/cm$^3$.

Zinc oxide (ZnO) and stearic acid, used in curing the devulcanized rubber compound, were obtained from Flexsys, the Netherlands. The curatives: sulfur and N-cyclohexyl-2-benzothiazolesulfenamide (CBS) were obtained from Merck. The solvents, acetone and tetrahydrofuran (THF), which were used for extractions, and toluene, which was used for equilibrium swelling measurements, were obtained from Biosolve. TDAE oil used as devulcanizing processing oil was supplied by Hansen&Rosenthal, Germany.

The following devulcanizing aids were used in the Comparative Examples:

DPDS: diphenyldisulfide, obtained from Sigma-Aldrich, Germany;
Vultac-2: phenol, 4(1,2 dimethylpropyl) polymer with sulfur chloride, obtained from Arkema, The Netherlands;
Si-266: pure bis [3-(triethoxysilyl)propyl]disulfide, obtained from Evonik.

The following devulcanizing aid was used in the Example:
6PPD: pure N-[1,3-dimethylbutyl)-N'-phenyl-phenylene diamine, obtained from Lanxess.

PREPARATION OF DE-VULCANIZED RUBBER

*Devulcanization.-* The devulcanizing aids were each added on an equimolar basis of active fragments (30 mmol/100g rubber compound) and blended with TDAE oil (5wt.%) and then swollen into the rubber at 65°C for 30 min in an oven. The thermochemical devulcanization was performed in a batch process in an internal mixer Brabender Plasticorder PL-2000, having a chamber volume of 50 ml and a cam-type rotor. A fill factor of 0.7 and a constant rotor speed of 50 rpm were used. The devulcanization temperature was 170 and the devulcanization time was 10 minutes.

The composition of the devulcanized rubber crumb is given in Table 1.

Table 1: composition of devulcanized rubber crumb

| **Component** | **wt. %** |
|---|---|
| Oil | 11.6 |
| Rubber polymer | 54.0 |
| Carbon black | 30.4 |
| Ash | 4.0 |

PREPARATION OF RE-VULCANIZED RUBBER

*Mixing and vulcanization.-* The devulcanized rubber of Table 1 was first compounded using a Brabender Plasticorder PL-2000, having a chamber volume of 50 ml and a cam-type rotor. A fill factor of 0.8 and a constant rotor speed of 50 rpm were used. The mixing temperature was 40°C and the mixing time was 8 minutes. The compounding formulation was as shown in Table 2.

Table 2: composition of re-vulcanized rubber

| Component | phr |
|---|---|
| Devulcanized rubber polymer | 182 |
| ZnO | 5 |
| Stearic acid | 3 |
| CBS | 1.6 |
| Sulfur | 1.2 |

The compound was tested for its cure characteristics using a RPA 2000 dynamic mechanical curemeter from Alpha Technologies at 170 °C, 0.833 Hz and 0.2 degree strain, according to ISO 6502. The compounds were then vulcanized for $t_{c,90}$ + 5 minutes in a Wickert WLP1600 laboratory compression molding press at 140 °C and 100 bar, into thick sheets. Moldings were cooled at the end of the curing cycle and stored in a cool and dark place for 24 hours before they were used for subsequent physical tests.

CHARACTERIZATION OF THE DEVULCANIZED AND RE-VULCANIZED RUBBER

*Rubber soluble fraction.-* The soluble (Sol) and insoluble (Gel) fractions of the reclaimed materials were determined by extraction in a Soxhlet apparatus. The vulcanized and de-vulcanized rubber samples were extracted initially for 48 hrs in acetone in order to remove low molecular polar substances like remains of accelerators and curatives, followed by an extraction for 72 hrs in tetrahydrofuran (THF) to remove the apolar components: oil and non-cross-linked polymer residues or soluble polymer released from the network by the devulcanization process. The extraction was followed by drying the samples in a vacuum oven at 40°C and determining the weight loss until constant weight. The sol fraction was defined as the sum of the soluble fractions in acetone and THF. Correction for the oil contained in the original SBR was made. The gel fraction was calculated by the following equation:

$$\text{Gel fraction} = 1 - \frac{\text{weight of rubber dissolved in solvents}}{\text{weight of pure rubber in the compound}} \qquad (1)$$

*Crosslink density.-* ASTM D 6814-02 - The extracted rubber samples were subsequently swollen in toluene for 72 hrs at room temperature. The weight of the swollen vulcanizates was measured after removal of surface liquid with absorption paper. The crosslink density was calculated according to the Flory-Rehner equations (2) and (3):

$$\nu_e = \frac{v_r + \chi v_r^2 + \ln(1 - v_r)}{V_s (0.5\, v_r - v_r^{1/3})} \qquad (2)$$

with

$$v_r = \frac{m_r}{m_r + m_r (\rho_r/\rho_s)} \qquad (3)$$

where:

$v_e$ = crosslink density per unit volume;
$v_r$ = polymer volume fraction of the swollen sample;
$V_s$ = solvent molar volume;
$m_r$ = mass of the rubber network;
$m_s$ = weight of solvent in the sample at equilibrium swelling;
$\rho_r$ = density of the rubber;
$\rho_s$ = density of the solvent;
$\chi$ = Flory-Huggins polymer-solvent interaction parameter.

*Cure characteristics* - ASTM D2064 - The cure characteristics were determined using a Rubber Process Analyzer (RPA 2000, Alpha Technologies). The change in torque was measured at a temperature of 140°C, for a frequency of 0.833 Hz and 2.79 % strain. The optimal vulcanization time considering the thickness of the sample was determined and used for press-curing the samples.

*Determination of odor* - The devulcanizates after preparation were stored in zip lock covers. The devulcanizates according to Example 1 were graded for smell with respect to the traditionally used devulcanizates in accordance with Comparative Experiments A to C. The smell panel consisted of applicant employees with and without rubber experience. The results are shown in Table 4 further below.

RESULTS AND DISCUSSION

Rheological curves were plotted after mixing the devulcanized rubber with the curing agents to study the curing activity. The curing recipe was kept constant; no adjustment of the sulfur or accelerator content was done. Referring to figure 1, it is clear that the modulus build-up (measured by torque) for the 6PPD devulcanizing agent is comparable to that of the state of the art DPDS devulcanizing agent. The Vultac-2 and Si-266 devulcanizing agents interfere with the curing process giving rise to a so-called marching modulus, especially the silane based compound Si-266.

It is widely accepted that after devulcanization, the curing tendency of the devulcanizate should decrease as the number of active crosslinking sites is reduced. Table 3 lists the Delta Torque ($\Delta$T) obtained from the rheological curves of figure 1.

Table 3: Delta Torque ($\Delta$T) obtained from the rheological curves of figure 1

| Experiment | Devulcanizing agent | Delta Torque ($\Delta$T), dN.m |
|---|---|---|
| Comparative Example A | DPDS | 3.01 |
| Comparative Example B | Vultac-2 | 4.04 |
| Comparative Example C | Si-266 | 4.82 |
| Example I | 6PPD | 3.57 |

A lower value of the Delta Torque indicates that double bonds reacted during the devulcanization process. Table 3 indicates that the 6PPD devulcanizing agent performs better than the state of the art disulfide devulcanizing agent DPDS. The agents used in Comparative Experiments B and C show an undesirable marching modulus, which is not observed by the 6PPD agent according to the invention.

The sol fractions and crosslink densities of the remaining gel as a function of the devulcanization temperature of rubber devulcanizates in presence of the above referenced devulcanizing agents are shown in figure 2. Basically, the increase of the rubber sol fraction and decrease of crosslink density indicate the extent to which the rubber network is broken.

The experimentally determined sol fractions of de-vulcanized rubber compounds according to the Comparative Experiments A to C and Example 1 as a function of the relative decrease in crosslink density are shown in figure 2. Also shown are theoretical curves (solid and dashed line), which have been generated by the method developed by M.M. Horikx, J.Polym.Sci., 19, 1956, 335, in which the rubber sol fraction of the devulcanizates and the crosslink density of the rubber gel fractions are correlated. Horikx in particular derived a theoretical relationship between the soluble fraction generated after degradation of a polymer network and the relative decrease in crosslink density, as a result of either main-chain scission or crosslink breakage. This treatment of polymer degradation can equally well be applied to rubber reclaiming, where also a mix of main-chain scission and crosslink breakage takes place. When main-chain scission takes place, the relative decrease in crosslink density is given by:

$$1 - \frac{\nu_f}{\nu_i} = 1 - \left[ \frac{\left(1 - s_f^{1/2}\right)^2}{\left(1 - s_i^{1/2}\right)^2} \right] \qquad (4)$$

where $s_i$ is the soluble fraction of the rubber network before degradation or reclaiming, $s_f$ is the soluble fraction of the reclaimed vulcanizate, $v_i$ is the crosslink density of the network prior to treatment and $v_f$ is the crosslink density of the reclaimed vulcanizate. For pure crosslink scission, the soluble fraction is related to the relative decrease in crosslink density by:

$$1 - \frac{\nu_f}{\nu_i} = 1 - \left[ \frac{\gamma_f}{\gamma_i} \frac{\left(1 - s_f^{1/2}\right)^2}{\left(1 - s_i^{1/2}\right)^2} \right] \qquad (5)$$

where the parameters $\gamma_f$ and $\gamma_i$ are the average number of cross-links per chain in the insoluble network after and before reclamation, respectively. The values for $\gamma_f$ and $\gamma_i$ have been determined as described in "M.A.L. Verbruggen, L. van der Does, J.W.M., Noordermeer, M. van Duin and H.J. Manuel, Rubber Chem. Technol., 72, 1999, 731". The solid curve in figure 2 corresponds to the theoretical situation where only random scission occurs while the dashed curve corresponds to the theoretical situation where only cross-links are broken. In the case of crosslink scission only, almost no sol is generated until most of the cross-links are broken; only then the long chains can be removed from the network. In the case of main-chain scission, sol is produced at a much earlier stage, because random scission of the polymers in the network results in small loose chains, which can easily be removed.

As is apparent from figure 2, addition of the 6PPD as devulcanizing agent to the tire truck rubber crump results in a more efficient devulcanization than obtained with the other agents in accordance with Comparative Experiments A to C. The decrease in crosslink density without creating extensive sol fraction is highest for Example 1. It appears that the 6PPD agent scavenges formed reactive radicals and prevents recombination of the rubber network in an improved way over known agents, such as the organosulfur compound DPDS.

The results obtained from the smell test panel are shown in Table 4.

Table 4: results of smell tests (1=no odor; 5=very strong odor)

| Experiment | Devulcanizing agent | Smell |
|---|---|---|
| Comparative Example A | DPDS | 4 |
| Comparative Example B | Vultac-2 | 3 |
| Comparative Example C | Si-266 | 5 |
| Example I | 6PPD | 2 |

The Si-266 silanes released ethanol fumes and had an intense odor, so these samples were placed on top for strong odor. From the smell panel results, it was clear that the known DPDS released a sulfurous odor which is undesirable. The 6PPD devulcanizate agent was the least odor intensive devulcanizate compared to the conventionally used devulcanizate agents.

## Claims

**1.** A method of devulcanizing a rubber vulcanizate of polymer chains and sulfur-containing cross-links between the polymer chains, the method comprising mixing the rubber vulcanizate with a devulcanizing agent and bringing the mixture to a temperature sufficient to cause cleavage of the sulfur-containing cross-links, wherein the devulcanizing agent comprises a p-phenylene diamine compound having the following formula:

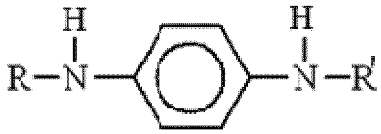

wherein R and R' can be the same or different groups, and may be hydrogen, alkyl or aryl, and the devulcanizing agent is substantially free of an organosulfur compound by comprising at most 1 wt.% of the organosulfur compound, wherein further the temperature during treatment is between 170°C and 280°C.

2. Method according to claim 1, wherein the p-phenylene diamine compound comprises a N, N'-dialkyl-p-phenylenediamine (R and R' are alkyl).

3. Method according to claim 1 or 2, wherein the p-phenylene diamine compound comprises a N, N'-diaryl-p-phenylenediamine (R and R' are aryl).

4. Method according to claim 1 or 2, wherein the p-phenylene diamine compound comprises a N-alkyl-N'-aryl-p-phenylenediamine (R is alkyl and R' is aryl).

5. Method according to claim 4, wherein the p-phenylene diamine compound comprises a N-alkyl-N'-aryl-p-phenylenediamine wherein R is alkyl and contains from 3 to 11 carbon atoms.

6. Method according to any one of the preceding claims, wherein aryl is phenyl.

7. Method according to claim 5, wherein the p-phenylenediamine compound comprises a N-(1,3-dimethylbutyl)-N'-phenyl-p-phenylenediamine.

8. Method according to any one of the preceding claims, further comprising mixing the rubber vulcanizate with a swelling agent and/or solvent, wherein the solvent is selected from the group consisting of one or more of toluene, naphtha, terpenes, benzene, cyclohexane, diethyl carbonate, ethyl acetate, ethyl benzene, isophorone, isopropyl acetate, methyl ethyl ketone and derivatives thereof.

9. Method according to any one of the preceding claims, wherein the amount of the devulcanizing agent ranges from 4 to 6 wt.%, relative to the total weight of the rubber vulcanizate.

10. Method according to any one of claims 8-9, wherein the amount of the swelling agent ranges from 4 to 6 wt.%, relative to the total weight of the rubber vulcanizate.

11. Method according to anyone of the preceding claims, further comprising substantially preventing abstraction of hydrogen atoms from the rubber vulcanizate polymer chains by substantially eliminating oxygen during mixing, and wherein the mixing is performed in the presence of nitrogen.

12. Method according to any one of the preceding claims, wherein the temperature of the mixture during treatment is between 190°C and 280°C.

13. Method according to any one of the preceding claims, wherein the treatment is performed in a satellite extruder.

14. Method according to any one of the preceding claims, wherein the rubber vulcanizate comprises natural rubber (NR), wherein the rubber vulcanizate is obtained by shredding truck tires.

15. Method according to any one of the preceding claims, wherein the rubber vulcanizate is provided in a particular form with a maximum particle size ranging from 0,8 to 2 mm.

## Patentansprüche

1. Verfahren zum Devulkanisieren eines Kautschukvulkanisats aus Polymerketten und Schwefel-enthaltenden Querverbindungen zwischen den Polymerketten, wobei das Verfahren aufweist das Mischen des Kautschukvulkanisats

mit einem Devulkanisierungsmittel und das Erwärmen der Mischung auf eine Temperatur, die ausreichend ist, um eine Spaltung der Schwefel-enthaltenden Querverbindungen zu verursachen, wobei das Devulkanisierungmittel eine p-Phenylendiamin-Verbindung mit folgender Formel aufweist:

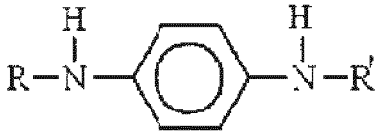

wobei R und R’ die gleichen oder verschiedenen Gruppen sein können und Wasserstoff, Alkyl oder Aryl sein können, und das Devulkanisierungsmittel im Wesentlichen frei von einer Organschwefelverbindung ist, indem es bis zu 1 Gewichtsprozent der Organschwefelverbindung aufweist, wobei die Temperatur weiterhin während einer Verarbeitung zwischen 170 °C und 280 °C liegt.

2. Verfahren nach Anspruch 1, wobei die p-Phenylendiamin-Verbindung ein N, N’-Dialkyl-p-phenylendiamin aufweist (R und R’ sind Alkyl).

3. Verfahren nach Anspruch 1 oder 2, wobei die p-Phenylendiamin-Verbindung ein N, N’-Diaryl-p-phenylendiamin aufweist (R und R’ sind Aryl).

4. Verfahren nach Anspruch 1 oder 2, wobei die p-Phenylendiamin-Verbindung ein N-Alkyl-N’-aryl-p-phenylendiamin aufweist (R ist Alkyl und R’ ist Aryl).

5. Verfahren nach Anspruch 4, wobei die p-Phenylendiamin-Verbindung ein N-Alkyl-N’-aryl-p-phenylendiamin aufweist, wobei R Alkyl ist und zwischen 3 und 11 Kohlenstoffatome enthält.

6. Verfahren nach einem der vorhergehenden Ansprüche, wobei das Aryl Phenyl ist.

7. Verfahren nach Anspruch 5, wobei die p-Phenylendiamin-Verbindung ein N-(1,3-dimethylbutyl)-N’-p-Phenylendiamin aufweist.

8. Verfahren nach einem der vorhergehenden Ansprüche, das weiterhin das Mischen des Kautschukvulkanisats mit einem Quellmittel und/oder Lösungsmittel aufweist, wobei das Lösungsmittel ausgewählt ist aus der Gruppe, die besteht aus einem oder mehreren von Toluol, Naphtha, Terpenen, Benzol, Cyclohexan, Diethylcarbonat, Ethylacetat, Ethylbenzol, Isophoron, Isopropylacetat, Methylethylketon und Derivaten davon.

9. Verfahren nach einem der vorhergehenden Ansprüche, wobei die Menge des Devulkanisierungsmittels zwischen 4 bis 6 Gewichtsprozent bezüglich des Gesamtgewichts des Kautschukvulkanisats liegt.

10. Verfahren nach einem der Ansprüche 8 bis 9, wobei die Menge des Quellmittels zwischen 4 bis 6 Gewichtsprozent bezüglich des Gesamtgewichts des Kautschukvulkanisats liegt.

11. Verfahren nach einem der vorhergehenden Ansprüche, das weiterhin im Wesentlichen das Verhindern der Abstraktion von Wasserstoffatomen aus dem Kautschukvulkanisat-Polymerketten aufweist, indem im Wesentlichen Sauerstoff während des Mischens entfernt wird und wobei das Mischen unter Anwesenheit von Stickstoff durchgeführt wird.

12. Verfahren nach einem der vorhergehenden Ansprüche, wobei die Temperatur der Mischung während der Behandlung zwischen 190°C und 280°C liegt.

13. Verfahren nach einem der vorhergehenden Ansprüche, wobei die Behandlung in einem Satelliten-Extruder durchgeführt wird.

14. Verfahren nach einem der vorhergehenden Ansprüche, wobei das Kautschukvulkanisat Naturkautschuk (NR) aufweist, wobei das Kautschukvulkanisat durch das Zerkleinern von Lastwagenreifen erhalten wird.

15. Verfahren nach einem der vorhergehenden Ansprüche, wobei das Kautschukvulkanisat in einer bestimmten Form

mit einer maximalen Teilchengröße im Bereich von 0,8 bis 2 mm vorgesehen wird.

**Revendications**

1. Procédé de dévulcanisation d'un vulcanisat de caoutchouc de chaînes polymères et de réticulations contenant du soufre entre les chaînes polymères, le procédé comprenant le mélange du vulcanisat de caoutchouc avec un agent de dévulcanisation et le fait d'amener le mélange à une température suffisante pour provoquer le clivage des réticulations contenant du soufre, dans lequel l'agent de dévulcanisation comprend un composé de p-phénylène diamine ayant la formule suivante :

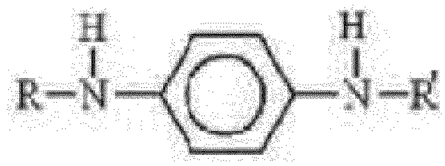

dans laquelle R et R' peuvent être des groupes identiques ou différents, et peuvent être un hydrogène, un alkyle ou un aryle, et l'agent de dévulcanisation est sensiblement exempt d'un composé organosoufré en comprenant au plus 1 % en poids du composé organosoufré, dans lequel en outre la température pendant le traitement est située entre 170 °C et 280 °C.

2. Procédé selon la revendication 1, dans lequel le composé de p-phénylène diamine comprend une N,N'-dialkyl-p-phénylènediamine (R et R' sont des alkyles).

3. Procédé selon la revendication 1 ou 2, dans lequel le composé de p-phénylène diamine comprend une N,N'-diaryl-p-phénylènediamine (R et R' sont des aryles).

4. Procédé selon la revendication 1 ou 2, dans lequel le composé de p-phénylène diamine comprend une N-alkyl-N'-aryl-p-phénylènediamine (R est un alkyle et R' est un aryle).

5. Procédé selon la revendication 4, dans lequel le composé de p-phénylène diamine comprend une N-alkyl-N'-aryl-p-phénylènediamine dans laquelle R est un alkyle et contient de 3 à 11 atomes de carbone.

6. Procédé selon l'une quelconque des revendications précédentes, dans lequel l'aryle est un phényle.

7. Procédé selon la revendication 5, dans lequel le composé de p-phénylènediamine comprend une N-(1,3-diméthylbutyl)-N'-phényl-p-phénylènediamine.

8. Procédé selon l'une quelconque des revendications précédentes, comprenant en outre le mélange du vulcanisat de caoutchouc avec un agent gonflant et/ou un solvant, dans lequel le solvant est sélectionné dans le groupe consistant par un ou plusieurs parmi le toluène, un naphta, les terpènes, le benzène, le cyclohexane, le carbonate de diéthyle, l'acétate d'éthyle, l'éthylbenzène, l'isophorone, l'acétate d'isopropyle, la méthyléthylcétone et les dérivés de ceux-ci.

9. Procédé selon l'une quelconque des revendications précédentes, dans lequel la quantité de l'agent de dévulcanisation est de 4 à 6 % en poids, par rapport au poids total du vulcanisat de caoutchouc.

10. Procédé selon l'une quelconque des revendications 8 et 9, dans lequel la quantité de l'agent gonflant est de 4 à 6 % en poids, par rapport au poids total du vulcanisat de caoutchouc.

11. Procédé selon l'une quelconque des revendications précédentes, comprenant en outre le fait d'empêcher sensiblement l'extraction des atomes d'hydrogène à partir des chaînes polymères de vulcanisat de caoutchouc en éliminant sensiblement l'oxygène pendant le mélange, et dans lequel le mélange est effectué en présence d'azote.

12. Procédé selon l'une quelconque des revendications précédentes, dans lequel la température du mélange pendant le traitement est située entre 190 °C et 280 °C.

**13.** Procédé selon l'une quelconque des revendications précédentes, dans lequel le traitement est effectué dans une extrudeuse satellite.

**14.** Procédé selon l'une quelconque des revendications précédentes, dans lequel le vulcanisat de caoutchouc comprend un caoutchouc naturel (NR), dans lequel le vulcanisat de caoutchouc est obtenu par déchiquetage de pneus de camion.

**15.** Procédé selon l'une quelconque des revendications précédentes, dans lequel le vulcanisat de caoutchouc est fourni sous une forme particulaire ayant une taille maximale de particule allant de 0,8 à 2 mm.

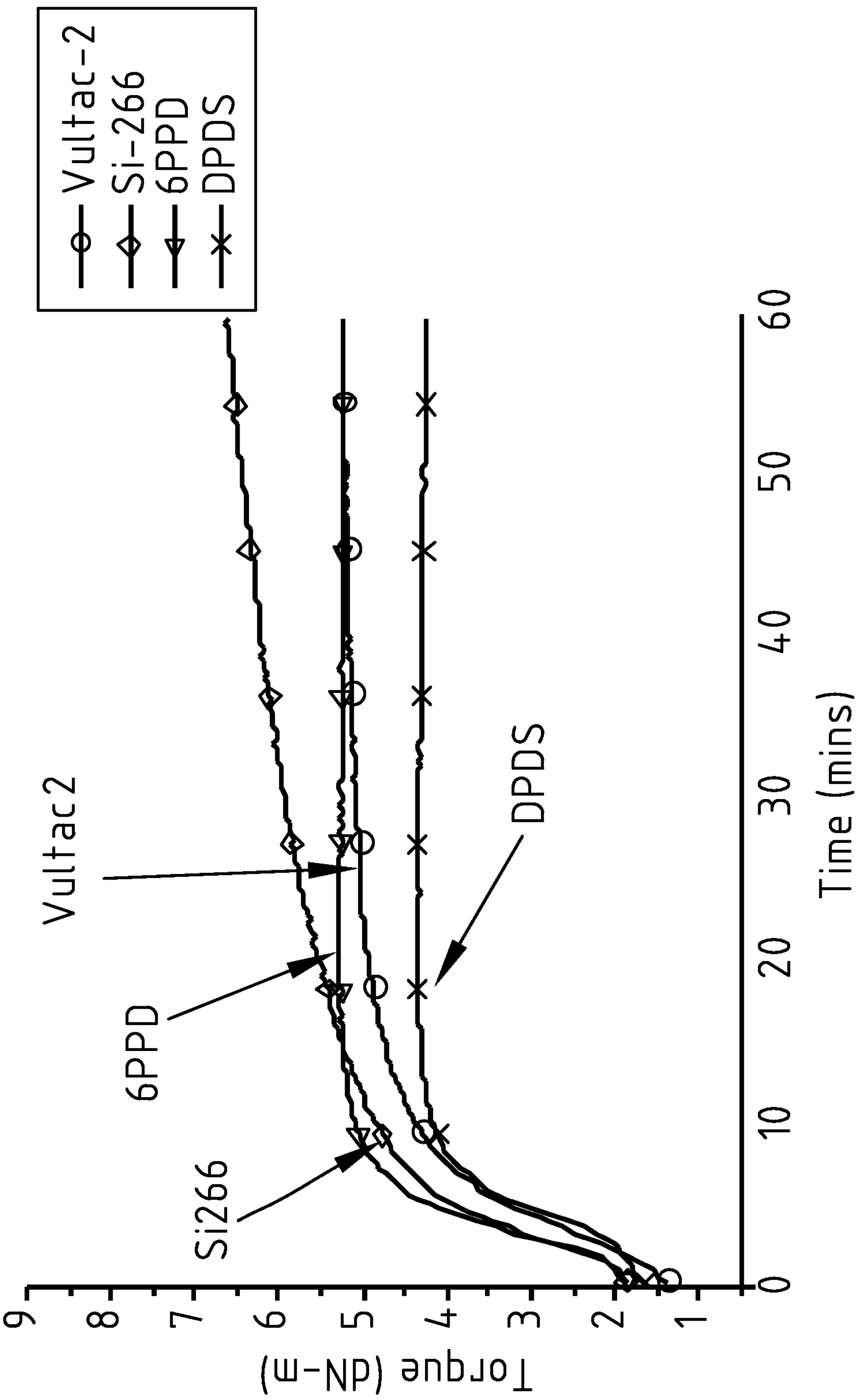

Vultac-2
Si-266
6PPD
DPDS
Vultac2
6PPD
Si266
DPDS
Torque (dN-m)
Time (mins)
9
8
7
6
5
4
3
2
1
0
10
20
30
40
50
60


FIG. 1

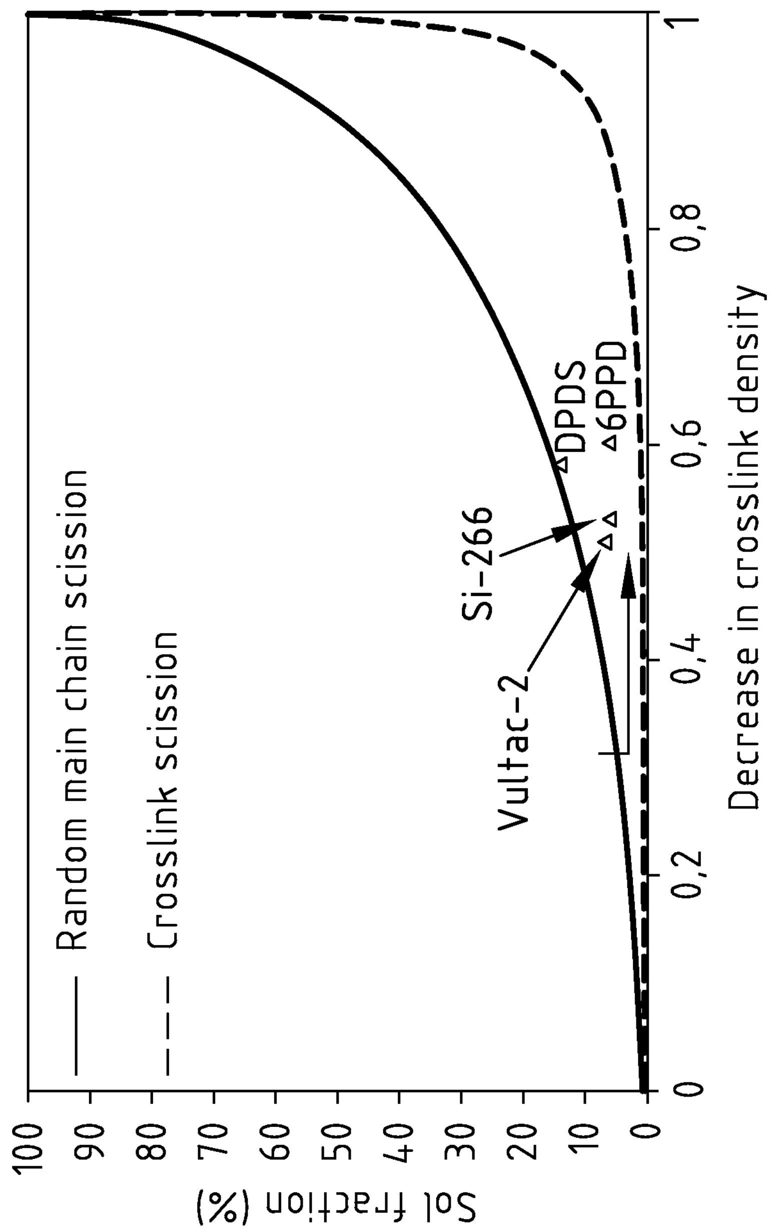
Random main chain scission
Crosslink scission
Si-266
Vultac-2
DPDS
6PPD
Decrease in crosslink density
Sol fraction (%)
0
0,2
0,4
0,6
0,8
1
0
10
20
30
40
50
60
70
80
90
100

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012134266 A2
- WO 0123465 A1
- WO 2014084727 A1


### Non-patent literature cited in the description


- **M.M. HORIKX.** *J.Polym.Sci.,* 1956, vol. 19, 335
- **M.A.L. VERBRUGGEN ; L. VAN DER DOES ; J.W.M., NOORDERMEER ; M. VAN DUIN ; H.J. MANUEL.** *Rubber Chem. Technol.,* 1999, vol. 72, 731